# FASCICULE DE BREVET EUROPEEN

(11) **EP 3 445 578 B1**
(45) Date de publication et mention de la délivrance du brevet: **15.09.2021**
(21) Numéro de dépôt: 17720702.4
(22) Date de dépôt: 18.04.2017
(51) Int. Cl.: B32B 3/08, B32B 5/12, B32B 5/30, E04B 1/74, B29C 63/00, E04C 2/296, B32B 5/20, B32B 9/00, B32B 9/04, B32B 13/02, B32B 15/08, B32B 15/14, B32B 21/08, B32B 21/10, B32B 27/06, B32B 27/08, B32B 27/12, E04B 1/80, E04C 2/24, E04C 2/38

(54) **PANNEAU MULTICOUCHES**
MEHRSCHICHTIGE PLATTE
MULTILAYER PANEL

(30) Priorité: 18.04.2016 FR 1653406
(43) Date de publication de la demande: 27.02.2019
(73) Titulaire: Groupe Renouveau Habitat International GRHI, 98000 Monaco (MC)
(72) Inventeur: BOURGUET-MAURICE, Frédéric, 06000 Nice (FR); BROQUAIRE, Ludovic, 83720 Trans En Provence (FR); THORMITIES, Jacqueline, Campbell, California 95008 (US)
(74) Mandataire: Decobert, Jean-Pascal
(86) Numéro de dépôt international: PCT/EP2017/059193
(87) Numéro de publication internationale: WO 2017/182471

(56) Documents cités:
- WO-A1-00/34598
- WO-A1-2007/059566
- JP-A- 2010 082 941

## Description

### DOMAINE DE L'INVENTION

La présente invention est relative notamment à des panneaux isolants multicouches à âme en mousse.

Une application préférée concerne le secteur du bâtiment, et plus spécifiquement l'industrie de fabrication de murs et/ou cloisons structurels ou non structurels.

### ARRIERE-PLAN TECHNOLOGIQUE

Dans ce dernier domaine, on connait de multiples façons de concevoir et de réaliser des cloisons afin de définir des pièces dans un bâtiment. On connait notamment les documents JP2010082941, WO2007/059566 et WO00/34598 qui décrivent de telles cloisons.

Une méthode classique pour réaliser de telles cloisons est par exemple la fabrication de panneaux sandwichs bi-composant avec une âme en mousse. Habituellement, l'âme en mousse est réalisée avec l'un des matériaux suivants : polyuréthane, XPS (polystyrène extrudé rigide) ou encore EPS (polystyrène expansé rigide). Généralement, ces types de panneaux sont ensuite recouverts d'un parement extérieur en bois, ciment ou métal.

Cette solution est peu onéreuse, et bien que largement adoptée par les fabricants, elle possède des inconvénients importants. Notamment, ces panneaux ont une très faible résistance aux incendies.

Une autre solution existante actuellement sur le marché est la réalisation de panneaux sandwich bi-composant formés de mousse XPS ou EPS ou en polyuréthane auquel on ajoute une couche de fibres de verre et de résine polyester ou époxy.

Cette solution est généralement adoptée pour la construction de « houseboat », c'est-à-dire, la construction d'habitation navale. Néanmoins, ces panneaux ont une résistance au feu encore plus faible que la solution précédente, et ne sont pas du tout adaptés aux contraintes des habitations terrestres classiques. En effet, il est compliqué de percer les panneaux sans endommager les fibres de verre et la résistance au choc est faible. Néanmoins, ces panneaux ont l'avantage d'être plus légers que les panneaux précédemment décrits.

Pour améliorer la résistance au feu et/ou aux chocs et augmenter la possibilité de fixer accessoires, pour l'ensemble des panneaux décrits ci-dessus, la solution est d'augmenter l'épaisseur de la mousse. Cette solution accroît l'encombrement et la masse des panneaux. Cela a pour effet d'augmenter les coûts de production, de pose et de transport. Qui plus est, l'encombrement plus grand diminue la surface habitable finale.

Il existe donc un besoin pour la réalisation de panneaux qui soient légers, économiques, et/ou dont la résistance au feu est améliorée et/ou dont les exigences liées à une habitation classique soient importantes (fixation d'éléments aux murs etc.).

L'invention permet de résoudre tout ou partie des inconvénients des techniques actuelles.

### RESUME DE L'INVENTION

Un aspect de l'invention concerne en particulier un panneau multicouche tel que défini par la revendication 1.

Cette disposition permet notamment d'avoir un panneau multicouche ayant une forte résistance à différente contraintes comme par exemple le cisaillement, les chocs, les incendies, sans accroître la masse et l'encombrement du panneau final.

Avantageusement, la couche de liaison de l'invention comprend au moins quatre bandes de tissu à base de fibres de verre et de résine, de manière à former un cadre de tissu sur les pourtours de la face correspondante de la couche centrale.

La forme de cadre de la couche de liaison permet notamment de garantir un renforcement de la structure du panneau important, sans accroitre la masse et l'encombrement du panneau.

L'invention concerne aussi un procédé de fabrication tel que défini par la revendication 11.

Ce procédé de fabrication permet d'améliorer la fabrication d'un panneau en permettant la réalisation de panneau sur mesure, tout en gardant des coûts de production maitrisés, et notamment par la réalisation simple d'un renforcement qui impacte de manière limitée l'encombrement et la masse du panneau.

De plus, la couche de liaison recouvre que partiellement la face de la couche centrale correspondante de sorte que la couche de parement est à la fois au contact de ces deux parties. Il est préféré que le contact périphérique de la couche de parement soit produit sur la couche de liaison et que le contact central soit produit sur la face de la couche centrale correspondante.

### BREVE INTRODUCTION DES FIGURES

D'autres caractéristiques, buts et avantages de la présente invention apparaîtront à la lecture de la description détaillée qui suit, et en regard des dessins annexés donnés à titre d'exemples non limitatifs et sur lesquels :

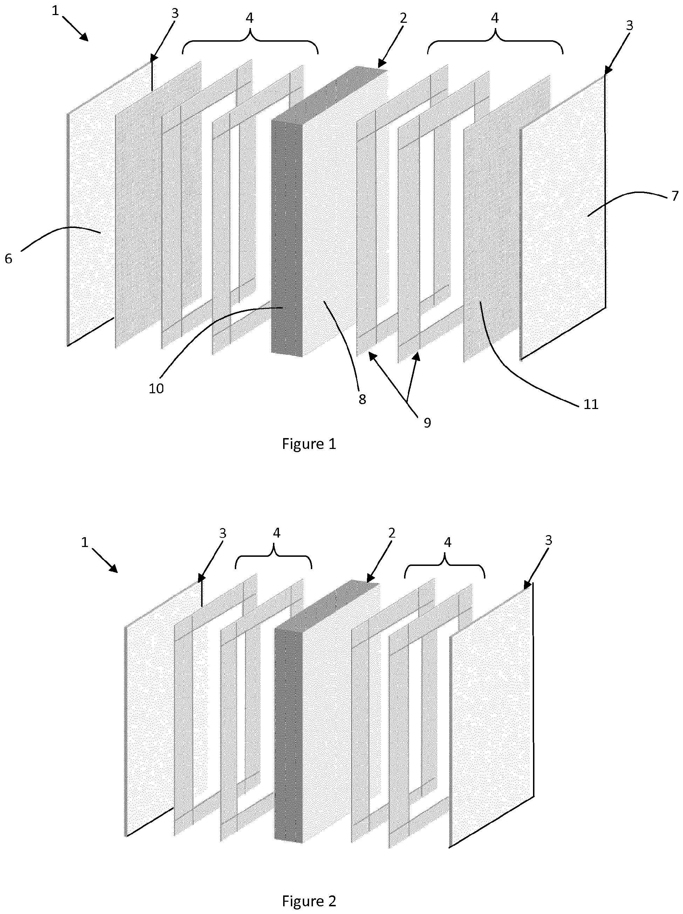

- la figure 1 montre une vue éclatée d'un panneau à neuf couches ;
- la figure 2 est une vue éclatée d'un panneau à sept couches ;

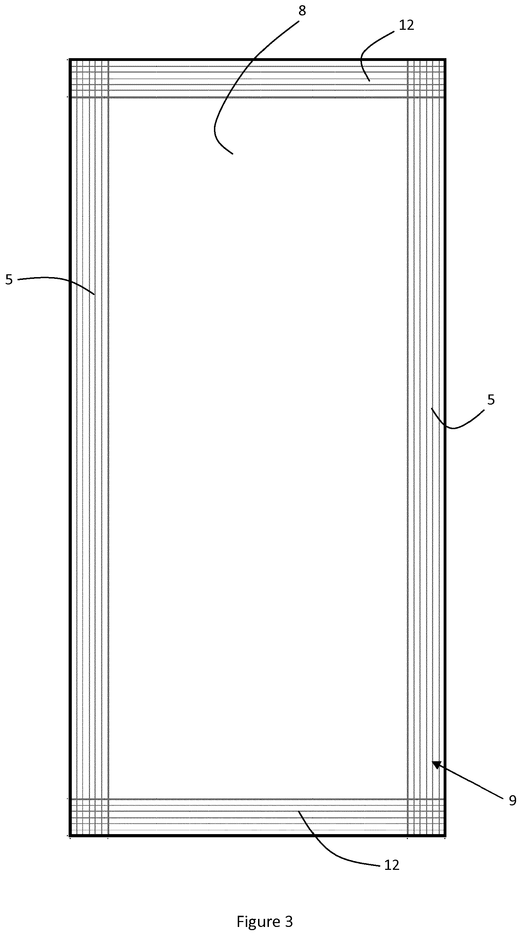

- la figure 3 montre la couche centrale associée au cadre de fibres de verre ;

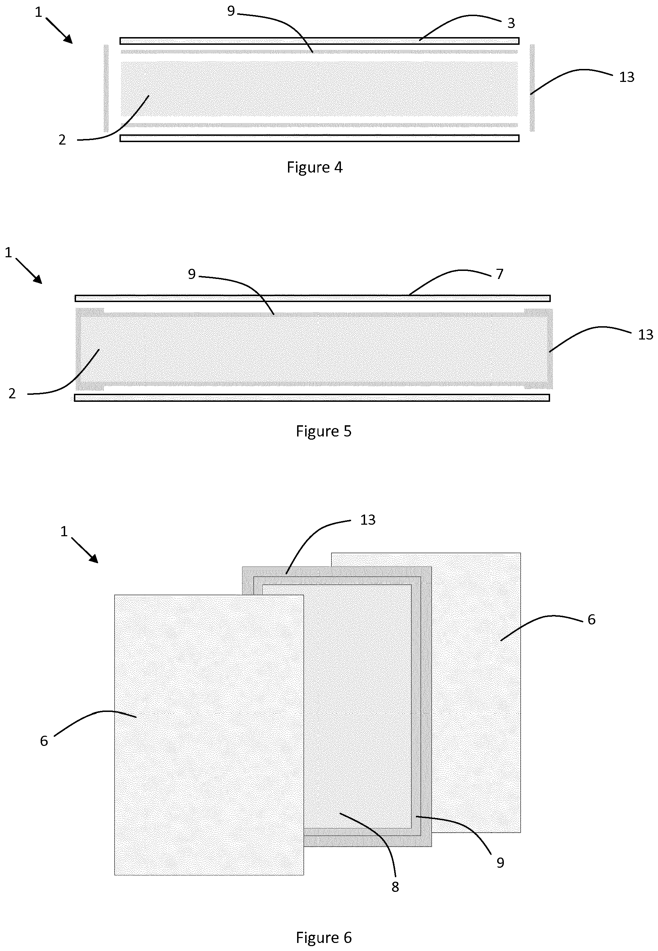

- la figure 4 montre une vue éclatée de dessus de la réalisation du panneau avec des bandes latérales ;
- la figure 5 montre de la réalisation du panneau avec des bandes latérales assemblées ;
- la figure 6 est une vue éclatée du panneau avec les cadres de fibres de verre positionnés ;
- la figure 7 est une vue de dessus de deux panneaux associés grâce à un élément de fixation en forme de H ;
- la figure 8 est une vue de dessus d'un panneau ayant un élément de liaison en forme de U.

### DESCRIPTION DETAILLEE

Avant d'entrer dans le détail de formes préférées de réalisation de l'invention en référence aux dessins notamment, d'autres caractéristiques optionnelles de l'invention, qui peuvent être mises en oeuvre de façon combinée selon toutes combinaisons ou de manière alternative, sont indiquées ci-après :
- Le cadre de tissu est formé de deux bandes longitudinales s'appliquant sur une dimension en longueur de la couche centrale, et de deux bandes complémentaires s'appliquant sur une dimension en largeur de la couche centrale.
- La couche de liaison comprend un premier et un deuxième cadre de tissu.
- Au moins deux bandes latérales de tissu à base de fibres de verre et de résine, configurées pour s'appliquer sur une, différente, des deux tranches longitudinales de la couche centrale tout en ayant deux portions chacune au contact d'une, différente, des première et deuxième faces de la couche centrale.
- La couche centrale comprend des éléments de liaison intégrés dans ses tranches longitudinales.
- Les éléments de liaison ont une section de U ou de H.
- Le tissu à base de fibres de verre et de résine comprend des fibres orientées.
- Les fibres du tissu à base de fibres de verre et de résine sont orientées selon des premières et des deuxièmes directions différentes les unes des autres.
- Les premières directions de l'orientation des fibres correspondent à une inclinaison de 0° et de 90° vis-à-vis de la direction longitudinale de chacune des bandes de tissu.
- Les deuxièmes directions de l'orientation des fibres correspondent à une inclinaison de +45° et -45° vis-à-vis de la direction longitudinale de chacune des bandes de tissu.
- L'un parmi le premier cadre et le deuxième cadre comprend des fibres orientées selon les premières directions, et l'autre parmi le premier et le deuxième cadre comprend des fibres orientées selon les deuxièmes directions.
- L'étape de positionnement d'au moins une couche de liaison sur la couche centrale comprend le positionnement de plusieurs bandes de tissu afin de former au moins un cadre de tissu sur les pourtours de la couche centrale.
- Le positionnement de plusieurs bandes de tissu permet de former deux cadres de tissu à base de fibres de verre et de résine, chacun des deux cadres de tissu possédant des fibres orientées selon des directions différentes.
- Le positionnement de deux bandes latérales de tissu à base de fibres de verre et de résine, chacune des deux bandes latérales étant configurée pour s'appliquer conjointement sur une tranche longitudinale et sur une portion de chacune des faces de la couche centrale.
- Dans lequel avant l'étape d'injection de la mousse isolante on positionne sur le pourtour intérieur du moule au moins un élément de liaison.
- Le panneau comprend préférentiellement trois à neuf couches.
- Le panneau comprend une couche centrale comprise entre deux couches de parement et entre chacune des couches de parement et la couche centrale une couche de liaison, et dans lequel la couche de liaison comprend deux cadres.
- Le panneau comprend neuf couches agencées successivement comme suit : une première couche de parement, une première couche de tissu de fibres de verre de préférence multiaxiales, un premier cadre de tissu de fibres de verre orientées selon une première direction, un deuxième cadre de tissu de fibres de verre orientées selon une deuxième direction, une couche centrale, un troisième cadre de tissu de fibres de verre orientées selon la première direction, un quatrième cadre de tissu de fibres de verre orientées selon la deuxième direction, une deuxième couche de tissu de fibres de verre et une deuxième couche de parement.
- Le panneau comprend cinq couches agencées successivement comme suit : une première couche de parement, un premier cadre de tissu de fibres de verre orientées selon une première direction, un deuxième cadre de tissu de fibres de verre orientées selon une deuxième direction, une couche centrale, un troisième cadre de tissu de fibres de verre orientées selon la première direction, un quatrième cadre de tissu de fibres de verre orientées selon la deuxième direction et une deuxième couche de parement.
- Un mur ou une cloison comprend une pluralité de panneaux selon les caractéristiques précédemment décrites.

Pour la bonne compréhension de l'invention, on entend par :
- longueur : la plus grande dimension de la base d'un objet à trois dimensions (par opposition à largeur et à profondeur),
- largeur : plus petite dimension de la base d'un objet à trois dimensions et ne s'étendant pas de la face avant vers la face arrières (par opposition à longueur et à profondeur), la dimension en largeur peut être égale à celle en longueur.
- profondeur : dimension de la face avant vers la face arrière,
- face : surface visible d'un panneau ou d'une couche,
- tranche : bord mince d'un panneau, dont la dimension est équivalente à la profondeur du panneau,
- longitudinal : qui est pris dans le sens de la longueur,
- cadre : forme permettant de délimiter un espace, notamment en formant un contour fermé autour de cet espace.
- fibres orientées : fibres orientées selon au moins une direction prédéfinie.
- une plaque de tissu en fibres de verre orientées est positionnée entre la couche de liaison et la couche de parement.
- la plaque de tissu comprend une dimension en largeur au moins égale à la dimension en largeur de l'une des première et deuxième faces additionnée aux dimensions en largeur des tranches longitudinales.
- la dimension en longueur de la plaque de tissu est au moins égale à la dimension en longueur de l'une des première et deuxième faces additionnée aux dimensions en largeur des tranches complémentaires.
- les quatre bandes de tissu formant au moins un cadre de tissu sont de préférence indépendantes les unes des autres.
- La totalité de la couche centrale est recouverte par au moins une plaque de tissu et de préférence par deux plaques de tissu.

L'invention concerne un panneau 1 dans le domaine de la construction et plus particulièrement pour réaliser des murs, ou cloisons, structurels ou non-structurels.

Le panneau 1 est multicouches. Avantageusement, le panneau a une forme rectangulaire. Néanmoins, cette forme rectangulaire n'est pas limitative. Avantageusement, les éléments constituants ledit panneau sont de formes, au moins périphériques, similaires à celui-ci.

Le panneau comprend au moins une couche isolante 2, une couche de liaison 4 et une couche de parement 3. Avantageusement, le panneau comprend deux couches de parement 3 et possiblement deux couches de liaison 4.

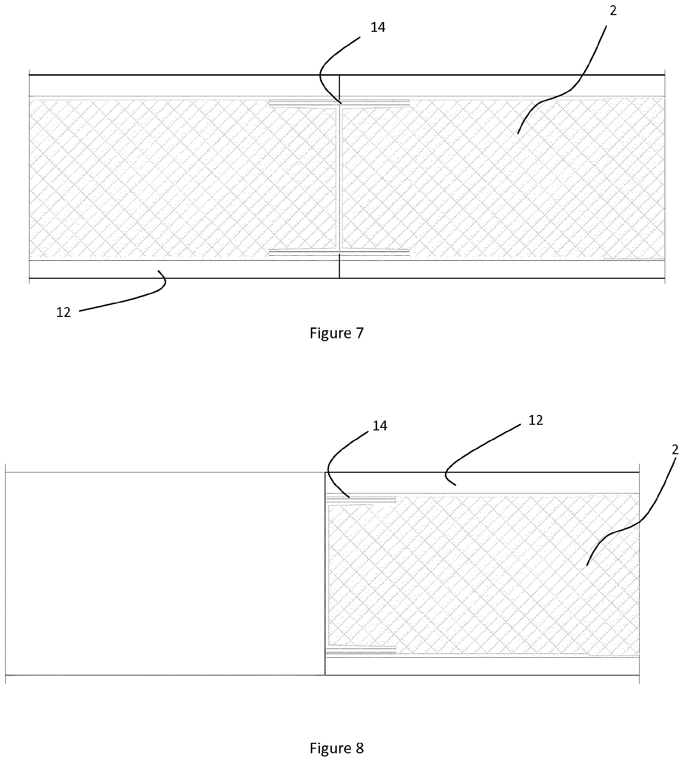

Avantageusement, le panneau peut comprendre des éléments de liaison 14. Avantageusement, ces éléments de liaison permettent un assemblage de panneaux 1 entre eux afin de réaliser un mur ou une cloison. Ainsi, l'invention comprend aussi la réalisation d'un mur ou d'une cloison grâce à un assemblage de plusieurs panneaux 1. De manière préférentielle, les éléments de liaison 14 peuvent avoir une forme de H (voir figure 7) ou de U (voir figure 8). L'avantage d'un élément de liaison 14 en forme de H est de pouvoir maintenir en position deux panneaux côte à côte tout en renforçant la structure du panneau. L'élément de liaison 14 en forme de U est principalement utilisé pour renforcer la structure du panneau 1, et pour lier ledit panneau 1 à une surface plane. Avantageusement ces éléments de liaison 14 sont complétement intégrés dans la couche centrale 2. Ainsi, aucune aspérité n'est présente sur les faces de la couche centrale 2.

Avantageusement et non limitativement, les dimensions d'un panneau 1 rectangulaire sont de 3 mètres (m) de longueur, 1.5 m de largeur et 15 centimètres (cm) de profondeur et de préférence 2.5 m de longueur, 1.2 m de largeur et 11 cm. Ces dimensions préférentielles permettent de conserver une masse et un encombrement raisonnable, sans pour autant diminuer la solidité de la structure dans son ensemble.

### La couche centrale 2

La couche centrale 2 comprend notamment une première et une deuxième face 8, deux tranches longitudinales 10 et deux tranches complémentaires. Avantageusement, il est précisé que les tranches longitudinales 9 sont les tranches s'étendant suivant la direction longitudinale de la couche centrale 2 par opposition aux tranches complémentaires qui représentent les autres tranches suivant la largeur de la couche centrale 2.

Optionnellement, les les première et deuxième faces 8 de la couche centrale 2 sont parallèles l'une à l'autre. Elles sont de préférence planes

Avantageusement, la distance séparant les première et deuxième faces 8 correspond à la profondeur de la couche centrale 2. De préférence, la profondeur de la couche centrale 2 est identique sur l'ensemble de la couche centrale 2. Dans une réalisation alternative non préférée, la profondeur de la couche centrale 2 est variable en différents points de la couche centrale 2. Ainsi, par exemple la couche centrale 2 peut être bombée en son centre.

Optionnellement, la profondeur de la couche centrale 2 est comprise entre 1 cm et 20 cm. De préférence, la profondeur de la couche centrale 2 est comprise entre 3 cm et 10 cm. La dimension de la profondeur de la couche centrale 2 est directement liée à différentes caractéristiques du panneau 1, et notamment à sa capacité isolante thermiquement, sa résistance structurelle, mais aussi son encombrement et sa masse. Ainsi, les dimensions préférées de l'invention permettent d'avoir le rapport encombrement-masse/résistante-isolation le plus avantageux.

Les tranches longitudinales 10 sont avantageusement mais non limitativement parallèles entre-elles. Avantageusement, dans la réalisation préférée de l'invention, les tranches longitudinales 10 sont perpendiculaires aux tranches complémentaires. La largeur des tranches longitudinales 10 correspond avantageusement à la profondeur de la couche centrale 2. Optionnellement, lorsque la profondeur de la couche centrale 2 n'est pas uniforme, la largeur des tranches longitudinales 10 correspond à la profondeur de la couche centrale 2 au niveau des extrémités desdites faces 8.

La couche centrale 2 est avantageusement isolante phonétiquement et/ou thermiquement. L'isolation de la couche centrale est de préférence réalisée par un matériau dont les propriétés permettent une isolation thermique et/ou phonique. Le matériau utilisé pour réaliser la couche centrale 2 est pris notamment et non limitativement parmi les matériaux suivants : mousse polyisocyanurate, mousse polyuréthane, EPS (polystyrène expansé rigide), mousse XPS (polystyrène extrudé rigide). Avantageusement, la couche centrale 2 peut être réalisée par injection de mousse dans un moule. Cette solution avantageuse permet de dimensionner la couche centrale 2 exactement selon les dimensions souhaitées.

Dans une réalisation alternative, la couche centrale 2 est découpée dans un bloc de mousse de taille plus importante. Dans cette réalisation, on découpe par exemple le bloc de mousse en autant de couches centrales 2 souhaitées. Cette réalisation à l'avantage d'obtenir une couche centrale 2 d'une densité plus importante.

L'utilisation de mousse pour réaliser la couche centrale 2 comporte de nombreux avantages et notamment : un rapport isolation/poids/encombrement très avantageux, une formation rapide et un coût de production maitrisé.

Avantageusement, les tranches latérales 10 de la couche centrale 2 peuvent comprendre des éléments de liaison. Ces éléments de liaison permettent comme nous l'avons dit précédemment d'assembler plusieurs panneaux 1 entre eux. Les éléments de liaison ont une section non limitative de H et/ou de U.

### Les couches de parement 3

Les couches de parement 3 comprennent notamment une face intérieure 6 et une face extérieure 7. De préférence, les faces intérieures 6 correspondent aux faces au regard des faces 8 de la couche centrale 2. Avantageusement, les dimensions en longueur et en largeur des couches de parement 3 sont similaires aux dimensions en longueur et en largeur de la couche centrale 2. Optionnellement, la forme des couches de parement 3 est similaire à la forme de la couche centrale 2. Avantageusement la profondeur des couches de parement 3 est inférieure à la profondeur de la couche centrale 2. De préférence, la profondeur des couches de parement 3 est la plus fine possible. Cette finesse a notamment pour but de réduire la masse des couches de parement 3. En réduisant la masse des couches de parement 3 on réduit ainsi la masse totale du panneau 1.

De manière non limitative les couches de parement 3 sont dans un matériau choisi parmi l'un des matériaux suivants : oxyde de magnésium, bois, ciment, fibrociment, métal, plastique, pierre.

La présence de couches de parement 3 permet divers avantages techniques en plus de l'aspect esthétique évident. En effet, en rajoutant une couche de parement 3 on augmente l'isolation phonique et thermique du panneau 1. Cela permet aussi d'améliorer la résistance au feu du panneau 1. Et plus généralement, cela permet d'améliorer la conservation de l'intégrité du panneau 1 en cas d'incident (choc, inondation etc.). Une augmentation de l'épaisseur de la couche de parement 3 permettra de renforcer ces caractéristiques techniques. Néanmoins, l'augmentation de la masse totale du panneau 1 est alors trop importante. Ainsi, on préférera avoir une couche de parement 3 la plus fine possible pour limiter la masse et l'encombrement total du panneau 1. L'ajustement des caractéristiques techniques du panneau 1 étant alors réalisé par la profondeur de la couche centrale 2 et par la couche de liaison 4.

Dans la réalisation préférée de l'invention, le panneau 1 comprend au moins une couche de parement 3 pour chacune des faces 8 de la couche centrale 2. Néanmoins, dans une réalisation non préférée de l'invention, une seule couche de parement 3 est positionnée au regard d'une seule face 8 de la couche centrale 2.

Dans la réalisation préférée de l'invention, les deux couches de parement 3 sont réalisées dans un matériau identique. Néanmoins, dans une réalisation alternative les deux couches de parement 3 sont réalisées dans des matériaux différents.

### La couche de liaison 4

Au moins une couche de liaison 4 est comprise entre au moins une couche de parement 3 et la couche centrale 2. De préférence le panneau 1 comprend deux couches de liaison 4. La couche de liaison comprend au moins quatre bandes de tissu. On entendra par bandes de tissu, des pièces de tissu généralement rectangulaires et présentant une surface d'une dimension inférieure à la surface des faces 8 de la couche centrale 2.

Les au moins quatre bandes de tissu permettent la réalisation d'au moins un cadre en tissu 9. Dans une réalisation de l'invention, la couche de liaison 4 comprend deux cadres de tissu 9. De préférence, chacun des cadres de tissu 9 est formé de 4 bandes de tissu. Les quatre bandes de tissu comprennent notamment deux bandes longitudinales 5 et deux bandes complémentaires 12. Il est précisé que les bandes longitudinales 5 sont les bandes s'étendant dans la direction longitudinale du panneau 1. Les bandes complémentaires 12 étant les bandes s'étendant dans les autres directions, et notamment suivant la largeur du panneau 1.

Avantageusement les bandes longitudinales et complémentaires 5 et 12 sont positionnées sur le pourtour des faces 8 de la couche centrale 2. C'est-à-dire sur les bords des faces 8 de la couche centrale 2 sans recouvrir les tranches longitudinales 10 et/ou complémentaires.

A leurs extrémités, les bandes longitudinales et complémentaires 5 et 12 peuvent se recouvrir deux à deux pour former un renfort aux coins du panneau 1.

Dans la réalisation où la couche de liaison 4 comprend deux cadres de tissu 9, les deux cadres de tissu 9 sont avantageusement superposés.

Nous avons décrit précédemment que les tranches latérales 10 de la couche centrale 2 pouvaient accueillir des éléments de liaison. Dans une réalisation où les éléments de liaison ne sont pas présents sur les tranches latérales 10, la couche de liaison 4 peut comprendre au moins une bande latérale 13 de tissu. Optionnellement, le panneau 1 comprend deux bandes latérales 13. De préférence, les bandes latérales 13 sont configurées pour s'appliquer sur les tranches longitudinales 10 de la couche centrale 2. De préférence la longueur des bandes latérales 13 est équivalente à la longueur de la couche centrale 2. Optionnellement, les bandes latérales 13 ont une longueur inférieure à la longueur de la couche centrale 2. Avantageusement, les bandes latérales 13 recouvrent d'une part les tranches latérales 10 et d'autre part une partie des faces 8. En effet, la largeur des bandes latérales 13 est avantageusement supérieure à la largeur des tranches longitudinales 10. Ainsi, une fois que les tranches longitudinales 10 sont recouvertes, le tissu complémentaire est replié sur les surfaces 8. Dans une réalisation alternative non représentée par les figures et non préférée, des bandes latérales 13 recouvrent aussi les tranches complémentaires.

Dans une réalisation alternative, une seule bande latérale 13 de préférence continue recouvre l'ensemble des tranches de la couche centrale 2. Dans cette configuration, la bande latérale 13 a une longueur équivalente au moins à deux fois la longueur des tranches longitudinales 10 auxquelles on ajoute la somme des longueurs des tranches complémentaires.

Le positionnement relatif des différents cadres de tissu 9 et des bandes latérales 13 peut-être variable. Ainsi, en partant de l'une des surfaces 8 de la couche centrale 2, les superpositions des cadres de tissu 9 et des bandes latérales 13 peuvent être, de préférence et non limitativement les suivantes : premier cadre de tissu 9, deuxième cadre de tissu 9 puis bandes latérales 13 ou premier cadre de tissu 9, bandes latérales 13 puis deuxième cadre de tissu 9 ou encore bandes latérales 13, premier cadre de tissu 9 puis deuxième cadre de tissu 9. Bien entendu d'autres combinaisons sont possibles en retirant ou rajoutant des cadres de tissu 9 et/ou des bandes latérales 13.

Dans la réalisation préférée de l'invention, les bandes longitudinales 5 ont une dimension en longueur équivalente à la dimension en longueur de la couche centrale 2. Les bandes complémentaires 12, ont quant à elles une dimension en longueur avantageusement similaire à la dimension en largeur de la couche centrale 2. Ces dimensions ne sont pas limitatives.

Avantageusement, la largeur des bandes longitudinales et complémentaires 5 et 12 sont identiques. Dans une réalisation alternative ces largeurs sont différentes. Avantageusement les dimensions des bandes longitudinales et complémentaires 5 et 12, et notamment leurs largeurs, sont calculées pour recouvrir entre 30 % à 60 % de la surface d'une des faces 8 de la couche centrale.

Dans une réalisation de l'invention, les bandes de tissu (bandes complémentaires 12 et bandes longitudinales 5) d'un premier cadre de tissu 9 sont plus larges que les bandes de tissu (bandes complémentaires 12 et bandes longitudinales 5) d'un deuxième cadre de tissu 9. Dans une autre réalisation de l'invention les bandes de tissu de tous les cadres de tissu 9 ont des dimensions similaires.

Dans une autre réalisation de l'invention, les bandes longitudinales 5 ont une dimension équivalente à la dimension en longueur de la couche centrale 2 multipliée par deux à laquelle on ajoute la dimension en profondeur de la couche centrale 2 elle aussi multipliée par deux. Cette configuration avantageuse permet avec une seule bande longitudinale 5 continue de parcourir, en une ceinture continue, les première et deuxième faces 8 de la couche centrale 2, mais aussi les tranches complémentaires. Il s'en suit un renforcement de la structure du panneau.

Les bandes complémentaires 12, quant à elles, peuvent avoir une dimension équivalente à la dimension en largeur de la couche multipliée par deux à laquelle on ajoute la dimension en profondeur de la couche centrale 2 multipliée aussi par deux. On retrouve ainsi les mêmes effets techniques que précédemment décris.

De plus, en utilisant quatre bandes de tissu pour réaliser simultanément un cadre sur chaque face 8 de la couche centrale, on bénéficie des avantages de la réalisation avec les bandes latérales 13, mais on peut aussi rajouter les éléments de liaison 14. En effet, une partie de la tranche longitudinale 10 est alors dépourvue de bande de tissu.

Bien entendu l'ensemble des réalisations précédemment décrites peuvent être combinées entre-elles dans la mesure où leur combinaison est possible.

Avantageusement le tissu utilisé pour les bandes longitudinales 5, complémentaires 12 et latérales 13 est à base de fibres de verre et résine. L'invention n'est pas limitée à ces composants particuliers. Ainsi, l'invention peut utiliser d'autres type de fibre, tels que par exemple des fibres de carbone ou de graphite ou encore toutes les fibres naturelles telle des fibres de lin et/ou de jute etc.

Avantageusement la résine utilisée est une résine organique telle du polyester ou époxy. Ce type de résine n'est pas limitatif, et d'autres résines peuvent bien entendu être utilisées.

Avantageusement, les fibres de verre sont orientées. Par exemple, l'orientation des fibres de verre se fait selon un angle par rapport à la direction longitudinale des bandes de tissu. Une première orientation des fibres de verre est de 0°/90°. C'est-à-dire que les fibres sont orientées alternativement dans le sens longitudinal de chacune des bandes (latérales 13, longitudinale 5 et complémentaire 12) et selon un angle de 90° vis-à-vis de la direction longitudinale desdites bandes de tissu.

Une deuxième orientation des fibres de verre est de 45°/135° ou +45°/-45°. C'est-à-dire que les fibres de verre sont orientées alternativement de 45° vis-à-vis de la direction longitudinale des bandes de tissu puis de 135° (suivant un même sens de rotation) ou de -45° (suivant un sens de rotation contraire).

Les bandes de tissu peuvent être réalisées soit avec une seule trame de fibres de verre, soit avec plusieurs trames de fibres de verre entrecroisées.

L'utilisation de fibres de verre orientées 0°/90° permet de renforcer la structure en compression, flexion et flambement. L'utilisation de fibres de verre orientées 45°/135° permet un renforcement de la structure en cisaillement et contremandement.

L'utilisation de bandes de tissu permet d'une part d'économiser de la matière (réduction des coûts et simplification de l'assemblage, réduction de la masse du panneau 1), de réduire l'épaisseur maximale du panneau 1, mais aussi de pouvoir ensuite rajouter une plaque de tissu 11 à base de fibres de verre multiaxiales. C'est-à-dire de fibres orientées selon plusieurs directions prédéfinies. Cette plaque de tissu 11 a notamment pour objectif d'améliorer la résistance de la structure pour les besoins d'habitation classique (perforation, résistance aux chocs, résistance au feu, etc.). Ainsi, sur un même panneau, l'utilisation de ces éléments permet de renforcer le panneau 1 sur l'ensemble des points, sans pour autant alourdir la structure. L'utilisation de cadres de fibres de verre et non pas de plaques de fibres de verre permet le renforcement du panneau 1 tout en maîtrisant son volume. L'utilisation de bandes latérales 13 permet de renforcer encore le panneau 1.

Avantageusement, un cadre de tissu 9 peut être formé de quatre bandes de tissu. De préférence les quatre bandes de tissu formant au moins un cadre de tissu 9 sont de préférence indépendantes les unes des autres. Avantageusement, les quatre bande de tissu comprennent des fibres de verre orientées 0°/90° ou 45°/135°. Dans une réalisation alternative, un cadre de tissu 9 peut être formé de bandes de tissu de fibres de verre orientée 0°/90° et 45°/135°. Par exemple (non limitatif), les bandes longitudinales 5 d'un cadre de tissu 9 peuvent être en fibres de verre orientées 0°/90°, et les bandes de tissu complémentaires 12 en fibres de verre orientées 45°/135°. L'inverse est aussi possible. Une alternance de l'orientation des fibres de verre est aussi envisageable (chacune des bandes longitudinales 5 et complémentaires 12 est en fibres de verre orientées selon la première direction et l'autre selon la deuxième direction).

Dans une autre réalisation de l'invention, un cadre de tissu 9 est apposé sur chacune des première et deuxième faces 8 de la couche centrale 2. Avantageusement ces cadres de tissu 9 sont en fibres de verre orientées selon l'une des directions parmi 0°/90° et 45°/135° correspondant à deux orientation croisées à 90° dans chaque cas. La référence de 0° peut correspondre à la direction longitudinale du panneau 2.
Dans cette réalisation, une plaque de tissu 11, avantageusement en fibres de verre orientée selon l'autre des directions parmi 0°/90° et 45°/135° est apposée sur au moins l'un des deux cadres de tissu 9 et de préférence sur chacun des deux cadres de tissu 9.

Avantageusement, la dimension en largeur de la plaque de tissu 11 est au moins égale à la dimension en largeur de la face 8 de la couche centrale 2 additionnée aux dimensions en largeur des tranches longitudinales 10 et de préférence est supérieure à la dimension en largeur de la face 8 de la couche centrale 2 additionnée à aux dimensions en largeur des tranche longitudinale 10 de manière à recouvrir en partie au moins la deuxième face 8.

Avantageusement la dimension en longueur de la plaque de tissu 11 est au moins égale à la dimension en longueur de la face 8 de la couche centrale 2 additionnée aux dimensions en largeur des tranches complémentaires et de préférence est supérieure à la dimension en largeur de la face 8 de la couche centrale 2 additionnée aux dimensions en largeur des tranches complémentaires de manière à recouvrir en partie au moins la deuxième face 8.

De cette manière, la plaque de tissu 11 enserre la couche centrale, ce qui améliore grandement la résistance du panneau 1 tout en limitant fortement les coûts de production. En effet, dans cette réalisation, 100% de la couche centrale 2 est recouverte au moins une plaque de tissu 11 et de préférence deux plaques de tissu 11. Cela permet notamment d'avoir un panneau 1 plus léger et plus résistant. La résistance en cisaillement est d'autant plus améliorée que les fibres des différents cadres de tissu 9 et/ou des plaques de tissu sont orientées selon des directions différentes. Enfin, dans la réalisation ou la longueur et la largeur de chacune des deux plaques de tissu 11 sont supérieures aux dimensions en largeur et en longueur de chacune des faces 8 du panneau 1 de la couche centrale 2 additionnée aux dimensions en largeur des tranches longitudinale 10 et des tranches complémentaires, alors chacune des faces 8 du panneau 1 comprend au moins 3 couches de tissu en fibres de verre orientées selon au moins deux directions. Ce qui améliore grandement la résistance dudit panneau 1 sans pour autant augmenter le coût de production et la masse du panneau 1.

Dans une réalisation alternative de l'invention, au moins un cadre de tissu 9 est dimensionné de manière à recouvrir une portion de l'une parmi la première ou la deuxième face 8 de la surface centrale ainsi qu'au moins les tranches longitudinales 10 et complémentaires de la couche centrale 2 et de préférence l'au moins un cadre de tissu 9 est dimensionné pour recouvrir une portion de l'une parmi la première ou la deuxième face 8 de la surface centrale 2 ainsi qu'au moins les tranches 10 de la couche centrale 2 et une portion de l'autre parmi la première ou la deuxième face 8 de la surface centrale 2.

### Procédé de fabrication d'un panneau 1

Avantageusement, le procédé de fabrication d'un panneau 1 comprend au moins les étapes suivantes :
- positionnement d'un moule reprenant les dimensions souhaitées du panneau 1,
- injection de mousse isolante dans le moule afin de former une première couche centrale 2,
- positionnement d'une couche de liaison 4 sur l'une des faces 8 de la couche centrale 2, ladite couche de liaison 4 étant formée d'au moins une bande de tissu en fibres de verre et résine,
- positionnement d'une couche de parement 3 sur la bande de tissu et au regard de la couche centrale 2,
- pressage des éléments entre eux afin de les solidariser.

Avantageusement l'étape de positionnement d'un moule et d'injection de la mousse isolante peut être remplacée par une étape de découpe de la couche centrale 2 dans un bloc de mousse. Cette solution permet d'obtenir une mousse avec une densité plus élevée, et donc possédant une structure plus robuste.

L'étape de positionnement d'au moins une bande de tissu en fibres de verre et résine sur la couche centrale 2 comprend le positionnement de plusieurs bandes de tissu afin de former au moins un cadre de tissu 9 sur les pourtours de la couche centrale 2. Avantageusement, le positionnement de plusieurs bandes de tissu permet de former deux cadres de tissu 9.

Dans la réalisation du panneau 1 comprenant des éléments de liaison 14, lesdits éléments de liaison 14 sont positionnés dans le moule avant l'injection de la mousse. Ainsi, l'intégration des éléments de liaison 14 dans la couche centrale 2 est améliorée.

L'étape de positionnement d'une couche de liaison 4 peut avantageusement comprendre le positionnement de plusieurs bandes de tissu afin de former un ou plusieurs cadres de tissu 9.

Avantageusement, l'ensemble des étapes à partir du positionnement d'une couche de liaison 4 peut être répété sur la deuxième face 8 de la couche centrale 2.

Dans une réalisation de l'invention, avant l'étape de positionnement d'une couche de parement 3, on positionne une plaque de tissu 11 à base de fibres de verre et résine. Les fibres de verre de ladite plaque de tissu 11 peuvent être multiaxiales, c'est-à-dire avec plusieurs orientations prédéfinies.

Dans une autre réalisation de l'invention, avant l'étape de positionnement d'une couche de parement 3, on positionne une plaque de tissu 11 à base de fibres de verre et résine sur une première face 8 de la couche centrale et par-dessus le cadre en tissu 9. Les fibres de verre de ladite plaque de tissu 11 sont avantageusement orientées selon une direction différente de celle du cadre de tissu 9. Avantageusement le positionnement de la plaque de tissu recouvre de préférence entièrement une première face 8 de la partie centrale 2 ainsi qu'au moins l'ensemble des tranches 10 et de préférence une partie de la deuxième face 8 sur laquelle un premier cadre en tissu 9 a déjà été posé. L'apposition d'une deuxième plaque de tissu 11 sur la deuxième face 8 de la couche centrale 2 est réalisée de manière à ce qu'elle recouvre de préférence entièrement la deuxième face 8 de la couche centrale 2 ainsi que les tranches longitudinale 10 et de préférence une partie de la première face 8 de la couche centrale 2. Cette deuxième plaque de tissu 11 recouvre ainsi en partie au moins la première plaque de tissu 11.

L'invention n'est pas limitée aux modes de réalisation précédemment décrits mais s'étend à tous modes de réalisation conformes aux revendications annexées.

### REFERENCES

1. panneau
2. couche centrale
3. couche de parement
4. couche de liaison
5. bande longitudinale
6. face intérieure
7. face extérieure
8. face
9. cadre de tissu
10. tranche longitudinale
11. plaque de tissu
12. bande complémentaire
13. bande latérale
14. élément de liaison

## Revendications

1. Panneau (1) multicouche comprenant au moins :
- une couche centrale (2) comprenant une mousse isolante et au moins une première et une deuxième faces (8) opposées, deux tranches longitudinales (10) et deux tranches complémentaires,
- deux couches de parement (3) comprenant chacune une face extérieure (7) et une face intérieure (6),
lesdites faces intérieures (6) des au moins deux couches de parement (3) étant chacune positionnée au regard d'une, différente, des faces (8) de la au moins une couche centrale (2),
au moins une couche de liaison (4) est positionnée entre une des couches de parement (3) et la couche centrale (2), la au moins une couche de liaison (4) comprenant au moins une bande de tissu à base de fibres de verre et de résine, **caractérisé en ce que** ladite bande de tissu est configurée pour recouvrir partiellement au moins l'une des première et deuxième face (8), et **en ce que**
la couche de liaison (4) comprend au moins quatre bandes de tissu à base de fibres de verre et de résine, de manière à former un cadre de tissu (9) sur les pourtours de la face (8) correspondante de la couche centrale (2).

2. Panneau (1) selon la revendication précédente dans lequel le cadre de tissu (9) est formé de deux bandes longitudinales (5) s'appliquant sur une dimension en longueur de la couche centrale (2), et de deux bandes complémentaires (12) s'appliquant sur une dimension en largeur de la couche centrale (2).

3. Panneau (1) selon l'une quelconque des deux revendications précédentes dans lequel la couche de liaison (4) comprend un premier et un deuxième cadre de tissu (9).

4. Panneau (1) selon l'une quelconque des revendications précédentes, comprenant au moins deux bandes latérales (13) de tissu à base de fibres de verre et de résine, configurées pour s'appliquer sur une, différente, des deux tranches longitudinales (10) de la couche centrale (2) tout en ayant deux portions chacune au contact d'une, différente, des première et deuxième (8) de la couche centrale (2).

5. Panneau (1) selon l'une quelconque des revendications 1 à 3, dans lequel la couche centrale (2) comprend des éléments de liaison (14) intégrés dans ses tranches longitudinale (10) et dans lequel les éléments de liaison (14) ont de préférence une section de U ou de H.

6. Panneau (1) selon l'une quelconque des revendications précédentes, dans lequel le tissu à base de fibres de verre et de résine comprend des fibres orientées selon des premières et des deuxièmes directions différentes les unes des autres.

7. Panneau (1) selon la revendication précédente, dans lequel les premières directions de l'orientation des fibres correspondent à une inclinaison de 0° et de 90° vis-à-vis de la direction longitudinale de chacune des bandes de tissu et dans lequel les deuxièmes directions de l'orientation des fibres correspondent à une inclinaison de +45° et -45° vis-à-vis de la direction longitudinale de chacune des bandes de tissu.

8. Panneau (1) selon l'une quelconque des trois revendications précédentes dans leur combinaison avec la revendication 3, dans lequel l'un parmi le premier cadre et le deuxième cadre comprend des fibres orientées selon les premières directions, et dans lequel l'autre parmi le premier et le deuxième cadre comprend des fibres orientées selon les deuxièmes directions.

9. Panneau (1) selon l'une quelconque des revendications précédentes dans lequel une plaque de tissu (11) en fibres de verre orientées est positionné entre la couche de liaison (4) et la couche de parement (3).

10. Panneau (1) selon la revendication précédente, dans lequel la plaque de tissu (11) comprend une dimension en largeur au moins égale à la dimension en largeur de l'une des première et deuxième face (8) additionnée aux dimensions en largeur des tranches longitudinales (10) et/ou dans lequel la dimension en longueur de la plaque de tissu (11) est au moins égale à la dimension en longueur de l'une des première et deuxième face (8) additionnée aux dimensions en largeur des tranches complémentaires.

11. Procédé de fabrication d'un panneau (1) selon les revendications précédentes comprenant au moins les étapes suivantes :
- positionnement d'un moule reprenant les dimensions souhaitées du panneau (1),
- injection de mousse isolante dans le moule afin de former une couche centrale (2),
- positionnement d'une couche de liaison (4) sur l'une des faces (8) de la couche centrale (2), ladite couche de liaison (4) étant formée d'au moins une bande de tissu à base de fibres de verre et de résine, ladite bande de tissu étant configurée pour recouvrir partiellement au moins l'une des première et deuxième face (8),
- positionnement d'une couche de parement (3) sur la couche de liaison (4) et au regard de la couche centrale (2),
- pressage des éléments entre eux afin de les solidariser,
le procédé comprenant également, pendant l'étape de positionnement de la au moins une couche de liaison (4) sur la couche centrale (2), le positionnement de plusieurs bandes de tissu afin de former au moins un cadre de tissu (9) sur les pourtours de la couche centrale (2).

12. Procédé selon la revendication précédente dans lequel le positionnement de plusieurs bandes de tissu permet de former deux cadres de tissu (9) à base de fibres de verre et de résine, chacun des deux cadres de tissu (9) possédant des fibres orientées selon des directions différentes.

13. Procédé selon l'une quelconque des deux revendications précédentes comprenant le positionnement de au moins deux bandes latérales (13) de tissu à base de fibres de verre et de résine, chacune des deux bandes latérales (13) étant configurée pour s'appliquer conjointement sur une tranche longitudinale (10) et sur une portion de chacune des faces (8) de la couche centrale (2).

## Patentansprüche

1. Mehrschichtige Platte (1), umfassend mindestens:
- eine zentrale Schicht (2), die mindestens einen Isolierschaum und mindestens eine gegenüberliegende erste und eine zweite Fläche (8), zwei Längskanten (10) und zwei komplementäre Kanten umfasst,
- zwei Deckschichten (3), die jeweils eine Außenfläche (7) und eine Innenfläche (6) umfassen,
wobei die Innenflächen (6) der mindestens zwei Deckschichten (3) jeweils gegenüber einer unterschiedlichen von den Flächen (8) der mindestens einen zentralen Schicht (2) positioniert sind,
wobei mindestens eine Verbindungsschicht (4) zwischen einer der Deckschichten (3) und der zentralen Schicht (2) positioniert ist, wobei die mindestens eine Verbindungsschicht (4) mindestens einen Gewebestreifen auf der Basis von Glasfasern und von Harz umfasst, **dadurch gekennzeichnet, dass** der Gewebestreifen ausgelegt ist, um mindestens eine von der ersten und zweiten Fläche (8) teilweise zu bedecken, und dass die Verbindungsschicht (4) mindestens vier Gewebstreifen auf der Basis von Glasfasern und von Harz umfasst, so dass ein Geweberahmen (9) auf den Umrandungen der entsprechenden Fläche (8) der zentralen Schicht (2) gebildet wird.

2. Platte (1) nach vorangehendem Anspruch, wobei der Geweberahmen (9) von zwei Längsstreifen (5) gebildet ist, die auf einer Längsabmessung der zentralen Schicht (2) anliegen, und von zwei komplementären Streifen (12), die auf einer Breitenabmessung der zentralen Schicht (2) anliegen.

3. Platte (1) nach einem der zwei vorangehenden Ansprüche, wobei die Verbindungsschicht (4) einen ersten und einen zweiten Geweberahmen (9) umfasst.

4. Platte (1) nach einem der vorangehenden Ansprüche, umfassend mindestens zwei seitlichen Gewebestreifen (13) auf der Basis von Glasfasern und von Harz, die ausgelegt sind, um auf einer unterschiedlichen von den zwei Längskanten (10) der zentralen Schicht (2) anzuliegen, bei Vorhandensein von jeweils zwei Abschnitten im Kontakt mit einer unterschiedlichen von der ersten und zweiten (8) der zentralen Schicht (2).

5. Platte (1) nach einem der Ansprüche 1 bis 3, wobei die zentrale Schicht (2) Verbindungselemente (14) umfasst, die in ihre Längskanten (10) integriert sind und wobei die Verbindungselemente (14) einen U- oder H-förmigen Querschnitt haben.

6. Platte (1) nach einem der vorangehenden Ansprüche, wobei das Gewebe auf der Basis von Glasfasern und von Harz Fasern umfasst, die in ersten und zweiten Richtungen ausgerichtet sind, die voneinander unterschiedlich sind.

7. Platte (1) nach vorangehendem Anspruch, wobei die ersten Richtungen der Ausrichtung der Fasern einer Neigung von 0° und von 90° gegenüber der Längsrichtung von jedem der Gewebstreifen entsprechen und wobei die zweiten Richtungen der Ausrichtung der Fasern einer Neigung von +45° und -45° gegenüber der Längsrichtung von jedem der Gewebstreifen entsprechen.

8. Platte (1) nach einem der drei vorangehenden Ansprüche in ihrer Kombination mit Anspruch 3, wobei einer von dem ersten Rahmen und dem zweiten Rahmen Fasern umfasst, die in den ersten Richtungen ausgerichtet sind, und wobei der andere von dem ersten und dem zweiten Rahmen Fasern umfasst, die in den zweiten Richtungen ausgerichtet sind.

9. Platte (1) nach einem der vorangehenden Ansprüche, wobei eine Gewebetafel (11) aus ausgerichteten Glasfasern zwischen der Verbindungsschicht (4) und der Deckschicht (3) positioniert ist.

10. Platte (1) nach vorangehendem Anspruch, wobei die Gewebetafel (11) eine Breitenabmessung umfasst, die mindestens gleich der Breitenabmessung von einer von der ersten und zweiten Fläche (8) ist, addiert zu den Breitenabmessungen der Längskanten (10) und/oder wobei die Längenabmessung der Gewebetafel (11) mindestens gleich der Längenabmessung von einer von der ersten und zweiten Fläche (8) ist, addiert zu den Breitenabmessungen der komplementären Kanten.

11. Verfahren zur Herstellung einer Platte (1) nach den vorangehenden Ansprüchen, umfassend mindestens die folgenden Schritte:
- Positionieren einer Form, die die gewünschten Abmessungen der Platte (1) übernimmt,
- Einspritzen von Isolierschaum in die Form, um eine zentrale Schicht (2) zu bilden,
- Positionieren einer Verbindungsschicht (4) auf einer der Flächen (8) der zentralen Schicht (2), wobei die Verbindungsschicht (4) von mindestens einem Gewebestreifen auf der Basis von Glasfasern und von Harz gebildet ist, wobei der Gewebestreifen ausgelegt ist, um mindestens eine von der ersten und zweiten Fläche (8) teilweise abzudecken,
- Positionieren einer Deckschicht (3) auf der Verbindungsschicht (4) und gegenüber der zentralen Schicht (2),
- Pressen der Elemente untereinander, um sie fest zu verbinden, wobei das Verfahren ebenfalls, während des Positionierungsschritts der mindestens einen Verbindungsschicht (4) auf der zentralen Schicht (2), das Positionieren von mehreren Gewebstreifen umfasst, um mindestens einen Geweberahmen (9) auf den Umrandungen der zentralen Schicht (2) zu bilden.

12. Verfahren nach vorangehendem Anspruch, wobei das Positionieren von mehreren Gewebstreifen erlaubt, zwei Geweberahmen (9) auf der Basis von Glasfasern und von Harz zu bilden, wobei jeder der zwei Geweberahmen (9) Fasern besitzt, die in verschiedenen Richtungen ausgerichtet sind.

13. Verfahren nach einem der zwei vorangehenden Ansprüche, umfassend das Positionieren von mindestens zwei seitlichen Gewebestreifen (13) auf der Basis von Glasfasern und von Harz, wobei jeder der zwei seitlichen Streifen (13) ausgelegt ist, um gemeinsam auf einer Längskante (10) und auf einem Abschnitt jeder der Flächen (8) der zentralen Schicht (2) anzuliegen.

## Claims

1. Multilayer panel (1) comprising at least:
- one central layer (2) comprising an insulating foam and at least one first and one second faces (8) on opposite sides, two longitudinal edges (10) and two complementary edges,
- two facing layers (3) each comprising an outer face (7) and an inner face (6),
said inner faces (6) of the at least two facing layers (3) each being positioned facing a different one of the faces (8) of the at least one central layer (2),
at least one connecting layer (4) is positioned between one of the facing layers (3) and the central layer (2), the at least one connecting layer (4) comprising at least one glass-fibre- and resin-based fabric strip, **characterised in that** said fabric strip is configured to partially cover at least one of the first and second face (8), and **in that** the connecting layer (4) comprises at least four glass-fibre- and resin-based fabric strips, in such a way as to form a fabric frame (9) on the perimeter of the corresponding face (8) of the central layer (2).

2. Panel (1) according to the preceding claim wherein the fabric frame (9) is formed from two longitudinal strips (5) that are applied on a dimension in length of the central layer (2), and of two complementary strips (12) that are applied on a dimension in width of the central layer (2).

3. Panel (1) according to any of the two preceding claims wherein the connecting layer (4) comprises a first and a second fabric frame (9).

4. Panel (1) according to any preceding claim, comprising at least two glass-fibre- and resin-based fabric strips (13), configured to be applied on a different one of the two longitudinal edges (10) of the central layer (2) while still having two portions each in contact with a different one of the first and second (8) of the central layer (2).

5. Panel (1) according to any of claims 1 to 3, wherein the central layer (2) comprises connecting elements (14) integrated in its longitudinal edges (10) and wherein the connecting elements (14) preferably have a U-shaped or H-shaped section.

6. Panel (1) according to any preceding claim, wherein the glass-fibre- and resin-based fabric comprises fibres oriented according to first and second directions that are different from each other.

7. Panel (1) according to the preceding claim, wherein the first directions of the orientation of the fibres correspond to an inclination of 0° and of 90° with regards to the longitudinal direction of each one of the fabric strips and wherein the second directions of the orientation of the fibres correspond to an inclination of +45° and 45° with regards to the longitudinal direction of each one of the fabric strips.

8. Panel (1) according to any of the three preceding claims in their combination with claim 3, wherein one among the first frame and the second frame comprises fibres oriented according to the first directions, and wherein the other among the first and the second frame comprises fibres oriented according to the second directions.

9. Panel (1) according to any preceding claim wherein a patch of oriented fibre-glass fabric (11) is positioned between the connecting layer (4) and the facing layer (3).

10. Panel (1) according to the preceding claim, wherein the patch of fabric (11) comprises a dimension in width at least equal to the dimension in width of one of the first and second face (8) added to the dimensions in width of the longitudinal edges (10) and/or wherein the dimension in length of the patch of fabric (11) is at least equal to the dimension in length of one of the first and second face (8) added to the dimensions in width of the complementary edges.

11. Method for manufacturing a panel (1) according to the preceding claims comprising at least the following steps:
- positioning a mould that has the desired dimensions of the panel (1),
- injecting insulating foam into the mould so as to form a central layer (2),
- positioning a connecting layer (4) on one of the faces (8) of the central layer (2), said connecting layer (4) being formed from at least one glass-fibre- and resin-based fabric strip, said fabric strip being configured to partially cover at least one of the first and second face (8),
- positioning a facing layer (3) on the connecting layer (4) and facing the central layer (2),
- pressing elements together so as to make them integral,
the method also comprising, during the step of positioning of the at least one connecting layer (4) on the central layer (2), the positioning of several fabric strips so as to form at least one fabric frame (9) on the perimeter of the central layer (2).

12. Method according to the preceding claim wherein the positioning of several strips of fabric makes it possible to form two glass-fibre- and resin-based fabric frames (9), each one of the two fabric frames (9) having fibres oriented according to different directions.

13. Method according to any of the two preceding claims comprising the positioning of at least two lateral glass-fibre- and resin-based fabric strips (13), each one of the two lateral strips (13) being configured to be applied jointly on a longitudinal edge (10) and on a portion of each one of the faces (8) of the central layer (2).
